# EUROPEAN PATENT SPECIFICATION

(11) **EP 2 713 063 B1**
(45) Date of publication and mention of the grant of the patent: **21.02.2018**
(21) Application number: 13186111.4
(22) Date of filing: 26.09.2013
(51) Int. Cl.: F16B 12/10

(54) **Mechanical joint for reversible coupling of two or more elements and joining**
Mechanische Verbindung zur lösbaren Verbindung von zwei oder mehreren Elementen und Verbindung
Joint mécanique pour couplage réversible de deux éléments ou plus et liaison

(30) Priority: 26.09.2012 IT CO20120048
(43) Date of publication of application: 02.04.2014
(73) Proprietor: Caccese, Alessandro, 83037 Montecalvo Irpino (IT)
(72) Inventor: Caccese, Alessandro, 83037 Montecalvo Irpino (IT)
(74) Representative: De Ros, Alberto

(56) References cited:
- WO-A1-2012/017386
- WO-A1-2012/041343
- DE-U1- 20 100 582
- US-A1- 2010 322 740

## Description

### Field of the invention

The present invention relates to elements joint through a reversible coupling mechanical joint.

The present invention is typically applied in making structures.

The term "reversible" means the possibility to easily couple and uncouple the elements, naturally by means of tools, without however jeopardizing the stability thereof.

### State of the art

As known, making a structure provides coupling the plurality of elements it is comprised of (at least two). Such a coupling provides that the mentioned elements are brought close to each other so as to firmly constrain them to each other; thereby, the structure obtained will be sufficiently stable and adapted to perform the intended function.

Various solutions are known for coupling the elements of a structure, which generally provide using a mechanical joint to be applied to the respective interfaces of the elements to be brought close to each other.

Several variants are known of these joints, among which the joint manufactured by the Applicant for which it filed international Patent Application No. WO2012017386 entitled "Mechanical joint for reversibly connecting elements with any angle of approach". Such a joint comprises at least two clamping pins and at least one connecting pin; the clamping pins have holes adapted to receive the connecting pin which in turn comprises an articulation at one intermediate point thereof such as to allow it to bend according to any angle. Thereby, the elements may be brought close to each other according to a predetermined selected angle, thus at the same time ensuring good securing thereof.

The step of applying the mechanical joint to the elements to be brought close to each other is of particular importance; this operation is often performed manually to ensure the proper execution thereof and then to adjust the joint, so as to limit the clearances created between it and the elements to be coupled.

From patent document WO 2012/041343 A1 there is known a joint coupling elements and having a broadened section located in a central region thereof; the broadened section is external to the elements both before and after coupling the elements.

From patent document DE 20100582 U1 there is known a joint coupling elements and having a broadened section located in a central region thereof; the broadened section is internal to the elements after coupling the elements; the internal shape of holes in the elements match exactly with the external shape of the joint.

### Summary

The Applicant has realized that the known art, partially described above, does not allow a joint for coupling elements to be obtained that is both applicable thereto in a smart and simple manner, and without the need to make successive adjustments.

The general object of the present invention is to overcome the above mentioned issues of the prior art. A first aspect of the present invention relates to the connecting pin of the joint, which by means of a different and original shape, allows it to be inserted in respective elements to be brought close to each other according to one or two different ways and such as not to be able to rotate after having been inserted.

A second aspect of the present invention again relates to the union pin of the joint, which has a broadened section in an intermediate area adapted to be inserted without radial clearance in the hole of each of the elements to be secured so as to align them with each other in a predetermined manner.

A third aspect of the present invention relates to the clamping pins of the joint, which by means of a different and original shape, may be coupled with the elements to be secured in one or two different ways and in such a manner as not to be able to rotate after having been inserted.

Although the three aspects mentioned are quite different and independent from each other, it is particularly advantageous to apply them on one same joint, thereby obtaining a synergistic effect from the cooperation thereof.

### List of the drawings

The invention will be now described in detail with reference to the accompanying drawings, provided by mere way of non-limiting example, in which:
- figure 1 is a perspective view of a connecting pin of joint elements according to a first embodiment of the invention;
- figure 2 is a perspective view of a connecting pin of joint elements according to a second embodiment of the invention;
- figure 3 is a perspective view of a connecting pin of joint elements according to a third embodiment of the invention;
- figure 4A is a perspective view of a connecting pin of joint elements according to a fourth embodiment of the invention (first variant) comprising an articulation for the bending thereof;
- figure 4B is a perspective view of a connecting pin of joint elements according to a fourth embodiment of the invention (second variant) comprising an articulation for the bending thereof;
- figure 5 is an exploded perspective view of joint elements according to a first embodiment of the invention;
- figure 6 is a perspective view of the joining in figure 5, assembled and with the elements coupled;
- figure 7 is a perspective view of a second embodiment of a connecting pin of joint elements according to the present invention (without elements to be coupled);
- figure 8A is a perspective view of an embodiment (first variant) of a clamping pin of joint elements according to the present invention;
- figure 8B is a perspective view of an embodiment (second variant) of a clamping pin of joint elements according to the present invention;
- figure 9 is a cross-section view of the clamping pins in figure 8;
- figure 10 is a cross-section view of a different clamping pin of joint elements according to the present invention;
- figure 11A is a longitudinal partial sectional view of joint elements according to the present invention in a first condition;
- figure 11B is a longitudinal partial sectional view of joint elements according to the present invention in a second condition that follows the condition in figure 11A;
- figure 11C is a longitudinal partial sectional view of joint elements according to the present invention in a third condition that follows the condition in figure 11B;
- figure 11D is a longitudinal partial sectional view of joint elements according to the present invention in a fourth condition (clamped pin) that follows the condition in figure 11C.

### Detailed description

Both this description and these drawings are only to be considered for illustrative purposes and therefore are non-limiting; so, the present invention may be implemented according to other and different embodiments; furthermore, consider that these figures are schematic and simplified.

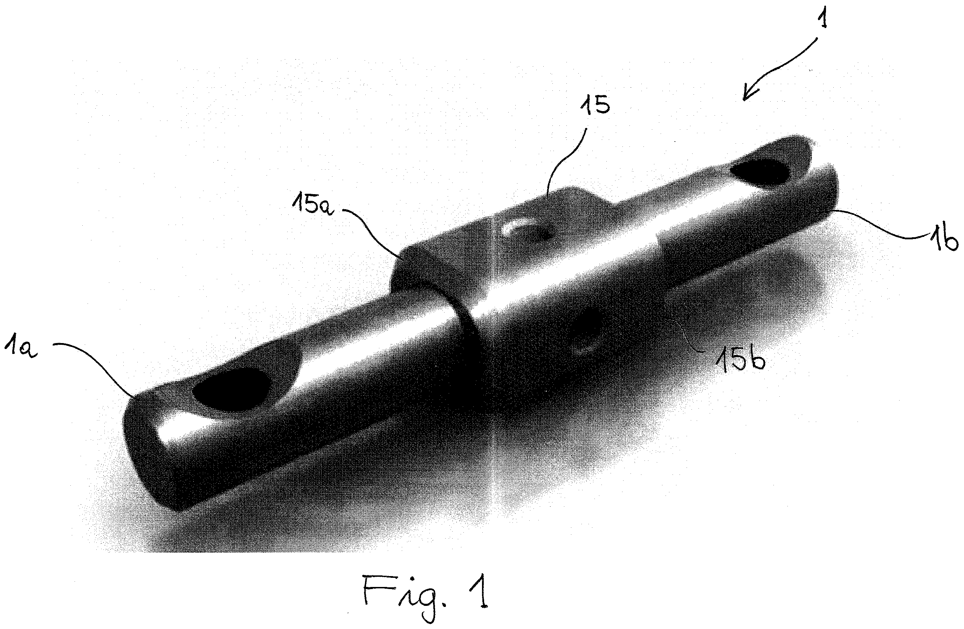

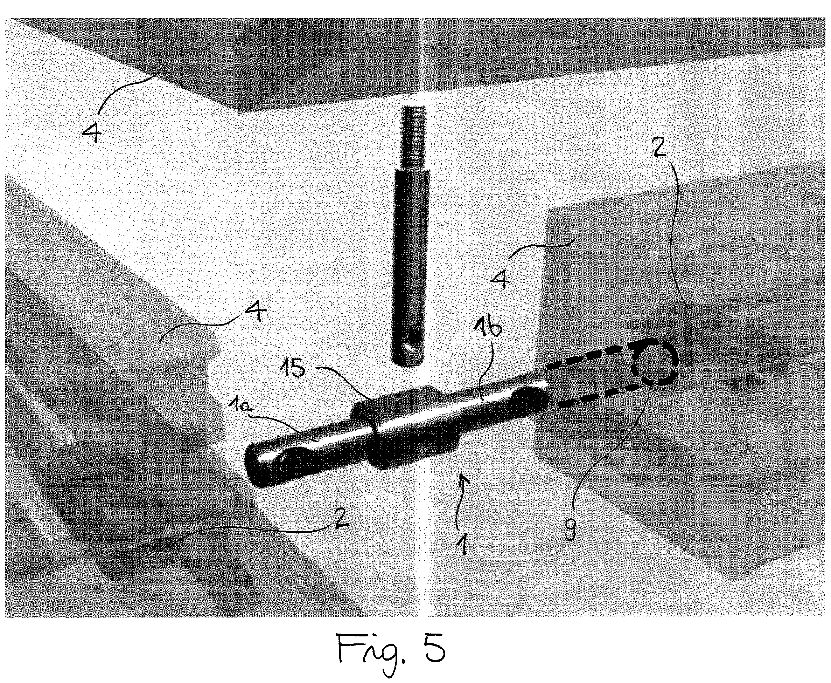

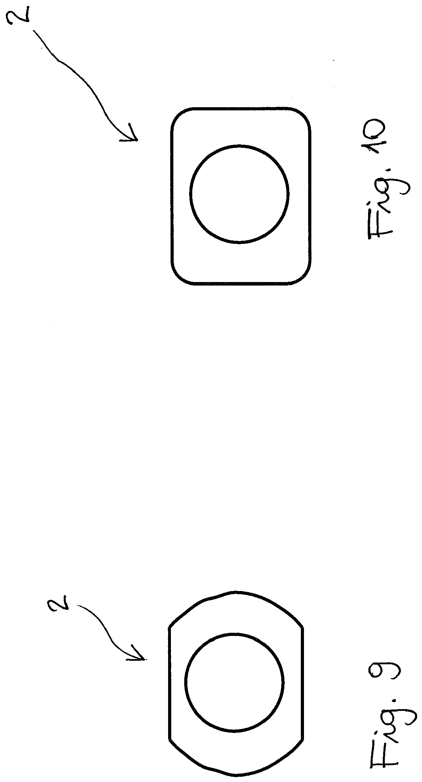

Numeral 1 in figures 1, 5 and 6 indicates a connecting pin of a mechanical joint for the reversible coupling of two or more elements 4 (see figures 5, 6 and 11A) to be brought close to each other, typically two or more wooden beams, comprising at least one hole 9 in the coupling interface. The joint of the joint elements according to the present invention comprises at least two clamping pins 2 and at least the mentioned connecting pin 1. Such a connecting pin 1 has two ends 1a, 1b adapted to be respectively inserted in the holes 9 on each interface of the elements 4, while the clamping pins 2 are adapted to be respectively coupled to the two ends 1a, 1b and to the two elements 4. According to the present invention, the connecting pin 1 comprises, at one intermediate section thereof, a broadened section 15 adapted to be inserted in the holes 9 of said two elements 4 so that they are aligned in a predetermined way. For the purpose of this description, the two or more elements 4 are intended as aligned in a predetermined way when the holes 9 substantially collimate, i.e. they are aligned along a same reference axis (e.g.: a symmetry axis which joins the centers of the holes). The broadened section 15 of the connecting pin 1 may have various shapes and sizes, according to the scope of use of the pin; this will be more apparent from the description below; it is worth mentioning that the outer shapes of the sections shown in figures 9 and 10 could be advantageously used as sections of the clamping pins and/or of the broadened sections of the connecting pins.

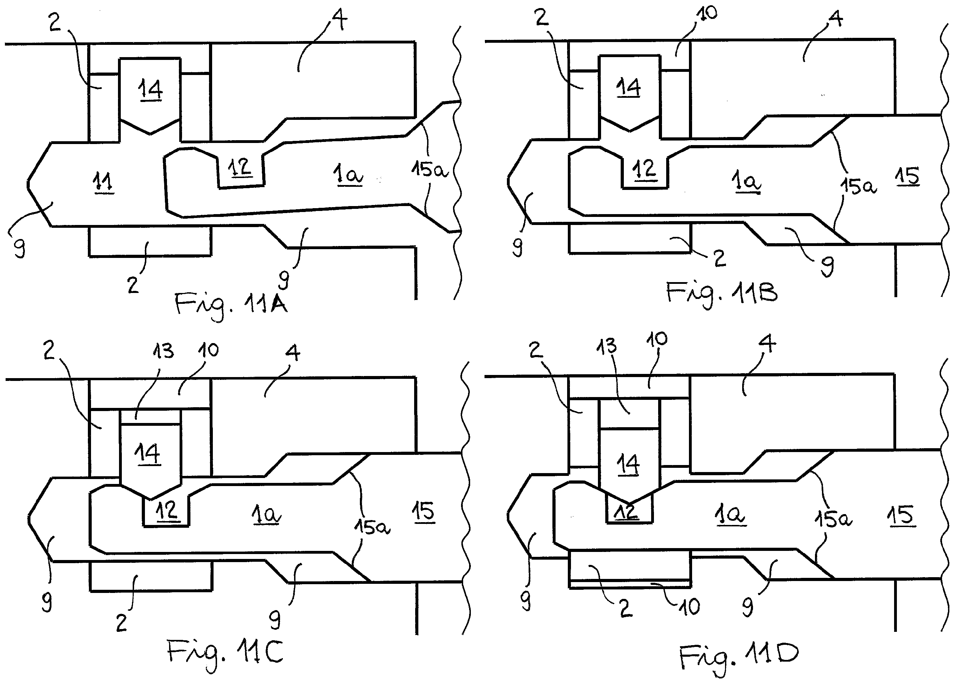

Again with reference to figure 1 and to figures 11A - 11D, it can be noted that the connecting pin 1 comprises respectively two bevels 15a, 15b close to the two end zones of the broadened section 15; advantageously, such bevels allow an effective insertion of pin 1 in hole 9, and the successive coupling with the clamping pins 2. In particular, they allow the elements to be aligned after they have been brought close to each other; indeed, if pin 1 is inserted in hole 9 and the elements are not aligned in the predetermined way, the bevels 15a and 15b will be in contact with the respective walls of the holes 9. When the connecting pin 1 is being secured, the draft pushes on the wall of the hole, thus allowing the proper positioning of the pin. According to the present invention, the broadened section 15 of the clamping pin 2 has a cross section with the same shape and size as the one of hole 9 in which it is inserted, preferably polygonal, in particular rectangular (see shape in figure 10).

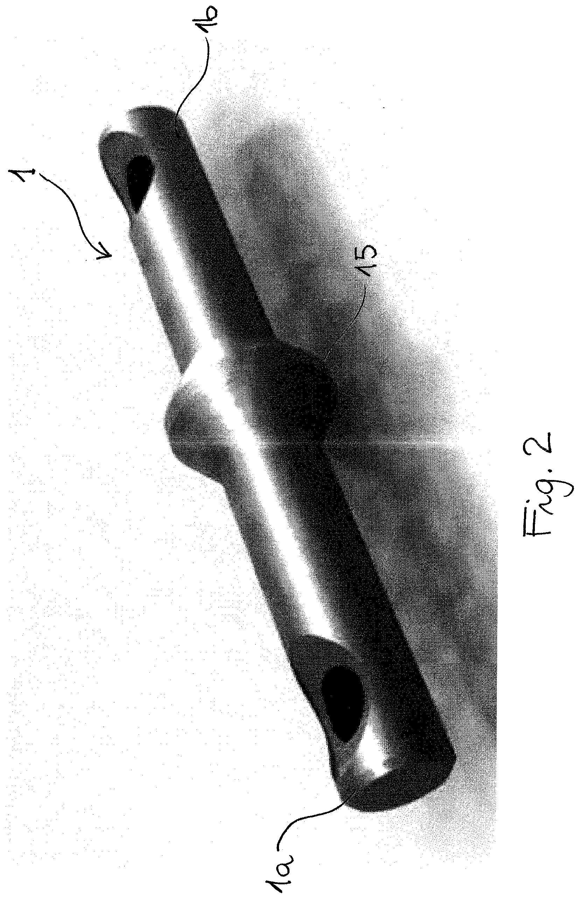

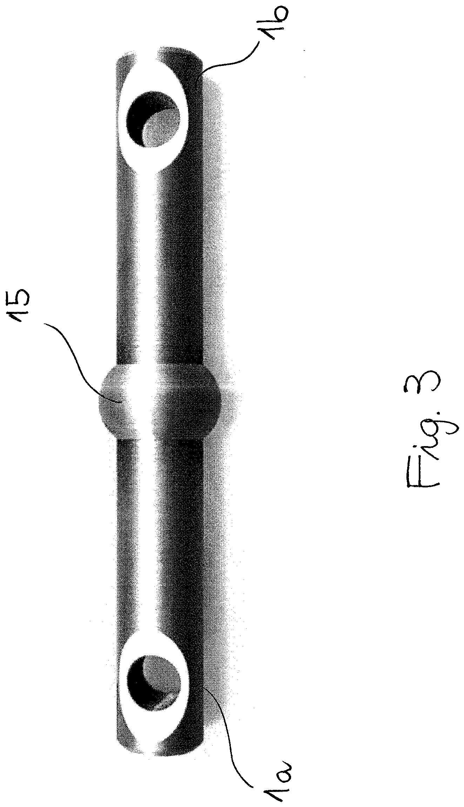

This configuration is highly advantageous when the clamping pin 2 is smartly inserted in hole 9 of element 4. Indeed, in this precise case, a machine tool (typically a robot) moves pin 1 with a specific instrument (typically a collet) and inserts it in hole 9 with the aid of specific electronic instrumentation (typically an infrared detection system); micro-vibrations are applied (typically using a hammer) to pin 1 to engage it in hole 9. The broadened section 15 thus devised makes it possible for the connecting pin 1 to be effectively and smartly inserted in hole 9, indeed the rectangular cross section thereof facilitates the gripping of the connecting pin 1 by the collet which holds and moves it, and furthermore allows the proper insertion thereof in hole 9: thereby, the insertion occurs according to a predetermined way. With reference to figures 2 and 3, further embodiments can be noted of a connecting pin 1, which is part of a joint of joint elements according to the present invention. In particular, the broadened section 15 has a circular or elliptic cross section (see outer shape in figure 9). The connecting pin 1 thus devised is particularly advantageous when it is manually coupled with the elements 4 and the clamping pins 2; and in particular, when the elements 4 are made of wood.

It is worth noting that the diameter of the section of the broadened section 15 is preferably slightly less than the section of hole 9, so that it may be conveniently inserted therein with clearance. When it is coupled with the elements 4 and the clamping pins 2, this configuration allows the functional movement of the connecting pin 1, which generates the predetermined alignment between the elements 4.

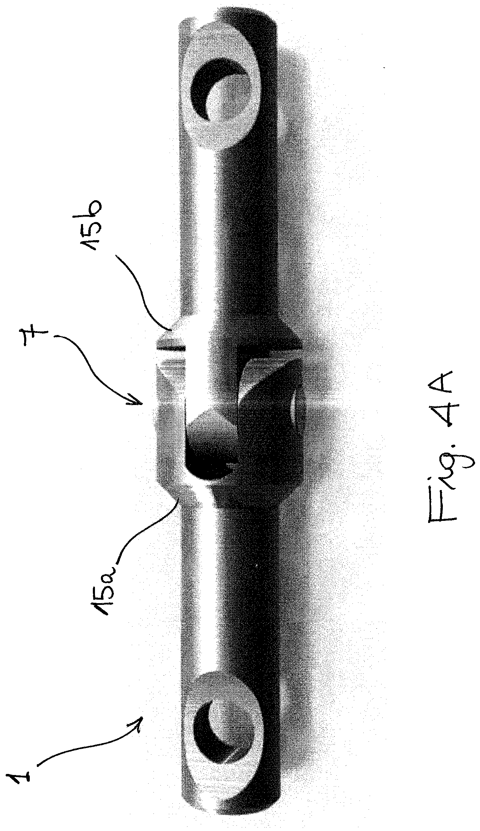

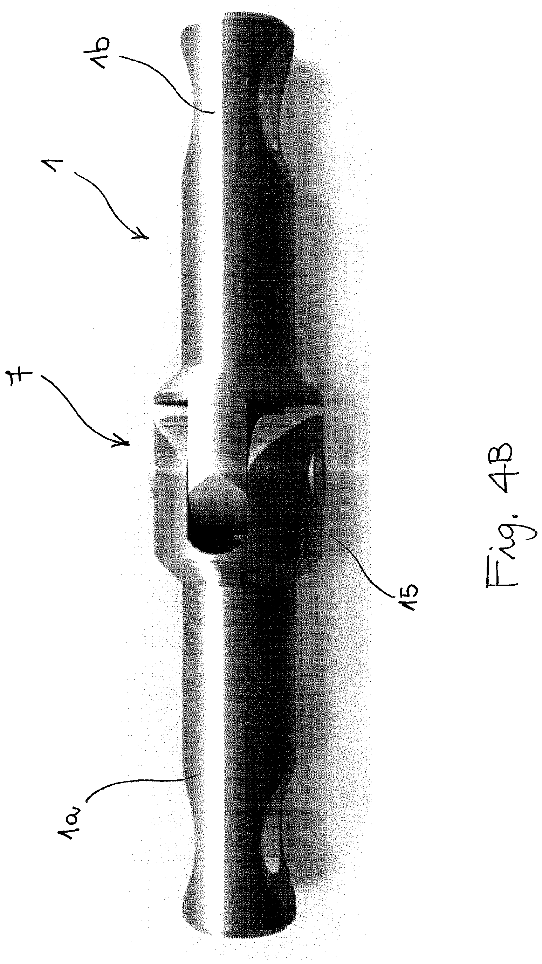

Again with reference to figure 3, the broadened section 15 of the connecting pin 1 has a dimension which is consistent with hole 9 in which it will be applied. Generally, such a dimension may differ and be, for example, smaller than that shown in the figure in applications in which this is required. When pin 1 from the embodiment for example in figure 3 , is tightened, the broadened section 15 lightly compresses the wooden fibres about hole 9, thereby the pin settles in the right position, corresponding to the predetermined alignment of the elements 4. Figures 4A and 4B show a connecting pin 1 of a joint of joint elements according to the present invention, in which such a pin 1 has an articulation 7 such as to allow pin 1 to be bent according to any angle and according to a single rotation axis. Advantageously, according to this configuration, the elements 4 may be brought close to each other according to a predetermined angle and depending on the flat interface surfaces of the elements. Hence, the same component may be adapted to different coupling conditions.

With reference to figures 9 and 10, another aspect of the present invention can be clarified which relates to the shape of the connecting pin 1 in the areas involved in the broadened section and/or the shape of the clamping pin 2; such a shape allows the insertion of the pin in holes of the elements to be brought close to each other according to only one or two different ways and such as not to be able to rotate after having been inserted. Preferably, such a shape of the section of the pin is a rectangle, for example with rounded edges, (see figure 10) or an elongated hexagon, for example with rounded edges, or an ellipse having at least one perimeter bevel (see figure 9).

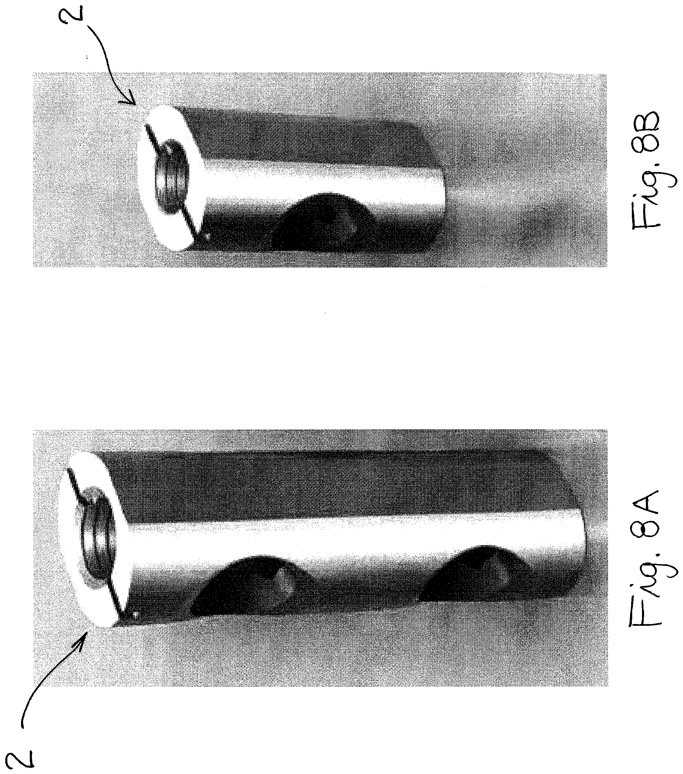

With reference to figure 8, note the two embodiments of the clamping pins, which shape is such so as to allow coupling with a hole (10 in figures 11) of an element (4 in figures 11) to be brought close in one or two different ways, and such as not to rotate after having been inserted. These clamping pins comprise a prismatic body with longitudinal extension, in which the base of this body is, for example, an ellipse having two perimeter bevels (see figure 9). Each of the clamping pins (2) has at least one transversal hole (11 in figure 11A) adapted to receive an end (1a or 1b) of the connecting pin (1), in which at least one edge of the transversal hole has a draft, thus facilitating the insertion of the end of the connecting pin.

Furthermore, according to a preferred embodiment, the connecting pin 1 has a transversal hole (12 in figures 11) at each of the two ends 1a, 1b. Each of the clamping pins 2 in turn has a longitudinal hole (13 in figures 11); the transversal hole of the connecting pin and the longitudinal hole of the clamping pin are adapted to receive a grub-screw (14 in figures 11) for tightening the joint and the firm union of the elements. According to a preferred embodiment (see for example, figures 11), at least one edge of the transversal hole (12) of the connecting pin (1) has a draft.

It is also worth noting that in addition to allowing the easy coupling of the mechanical components, the various drafts also ensure particularly strong tightening and/or the lack of clearances. In particular, the draft on the edge of the transversal holes of the connecting pin has a surface on which the tip of the grub-screw may exercise a given force during tightening (see figure 11C and figure 11D). By exploiting this configuration, the pin is thus tightened in the proper alignment position.

With reference to figures from 11A to 11D, it is evident how a joining is created according to the present invention; such figures only refer to one of the two elements 4 to be coupled; typically, the same solution or two similar solutions are used for the two elements to be coupled, and hence for the two ends of the connecting pin.

Element 4 has a hole 9 for (approximately) half of the connecting pin 1 and a hole 10 for the clamping pin 2; hole 9 comprises an inner part which is adapted to receive an end 1a of the connecting pin 1, and an outer part which is adapted to receive (approximately) half of the broadened section 15 of the connecting pin; the section (for example rectangular) of the outer part of the hole corresponds exactly - that is without radial clearance - to the section (for example, rectangular) of the broadened section of the pin; the section (typically circular) of the inner part of the hole does not correspond exactly to the section (typically circular) of the end of the pin, but has a given radial clearance, for example 0.5 - 1.0 mm. The clamping pin 2 is inserted in hole 10 and the grub-screw 14 thereof is completely unscrewed. The axis of hole 10 is incident and transversal to the axis of hole 9; in particular, they are incident and orthogonal to each other.

Note in figure 11A that end 1a enters, without difficulty, both in the outer part of hole 9 and in the inner part of hole 9 due to the radial clearance; furthermore, end 1a also starts entering the transversal hole 11 of the clamping pin 2. Note also that bevel 15a of the broadened section 15 of the connecting pin 1 nears the outer edge of hole 9; bevel 15a promotes the alignment and further insertion of pin 1 in hole 9.

Since pin 1 aligns perfectly on one side with the hole of a first element to be coupled, and on the other side with the hole of a second element to be coupled, the two elements to be coupled will also be perfectly coupled with each other.

In figure 11B, pin 1 is increasingly inserted in hole 9; end 1a completely (or almost) fills hole 11; the broadened section 15 is well inserted in the most outer part of hole 9.

In figure 11C, the grub-screw 14 of pin 2 is screwed until the tip thereof comes in contact with the upper draft of hole 12 of end 1a. By further tightening the grub-screw 14, the tip of the grub-screw 14 will act on the draft of hole 12 and a force of traction (horizontal towards the left in the figure) will be applied to the connecting pin 1; the action of the grub-screw 14 will also generate a slight raising of the clamping pin 2.

In figure 11D, the grub-screw 14 of pin 2 is completely screwed until the tip thereof is coupled perfectly with the draft of hole 12; pin 1 is completely drawn; note how pin 2 is slightly raised. It is also worth noting that when the joint is being tightened, the condition of the two halves of the joining is typically intermediate between the one in figure 11C and the one in figure 11D.

It is evident that the joinings resulting from the use of a joint according to the present invention are very solid, strong, stable and accurate.

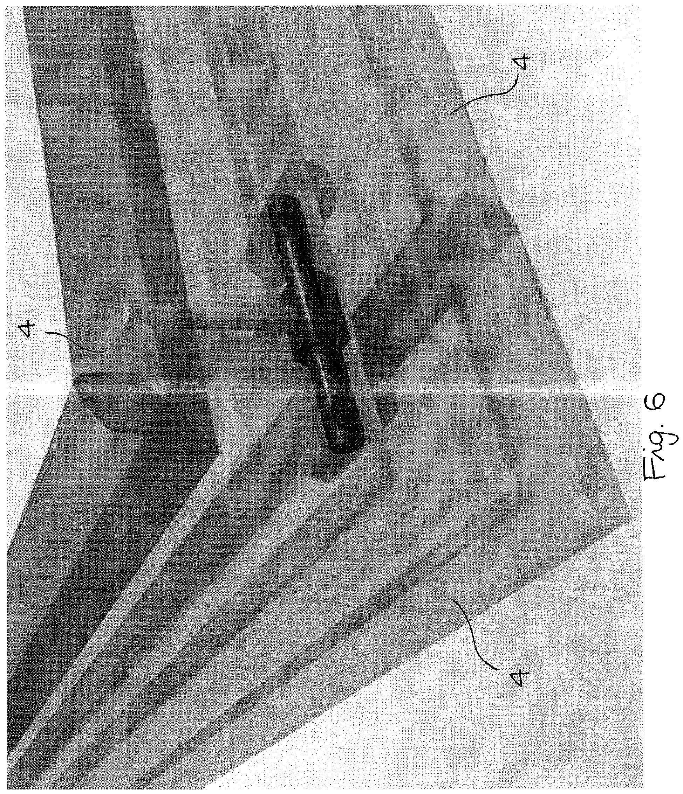

With reference to figures 5 and 6, a joint is shown in which the connecting pin 1 is inserted in the holes of the elements 4 to be coupled and is coupled with the clamping pins 2. In these figures, the connecting pin is like the one shown in figure 1, and the clamping pins are like the one shown in figure 8B; the section of the connecting pin is shown in figure 10, and the section of the clamping pins is shown in figure 9 . In these figures, the two elements 4 are brought close to each other so as to form substantially an "L" once they are joined. Furthermore, with particular reference to figure 6, it can be noted how the joint elements according to the present invention may be advantageously used to connect more than two elements to each other (note the decorative element in the upper section of these two figures). To this end, in the solution shown, a pin threaded on both ends was used; a first thread thereof screws in a corresponding threaded hole of the broadened section 15 of the connecting pin 1, and a second thread thereof screws in a corresponding thread of a decorative element. Such a configuration is particularly advantageous for connecting a decorative element or a lighter and smaller element than the two elements already connected.

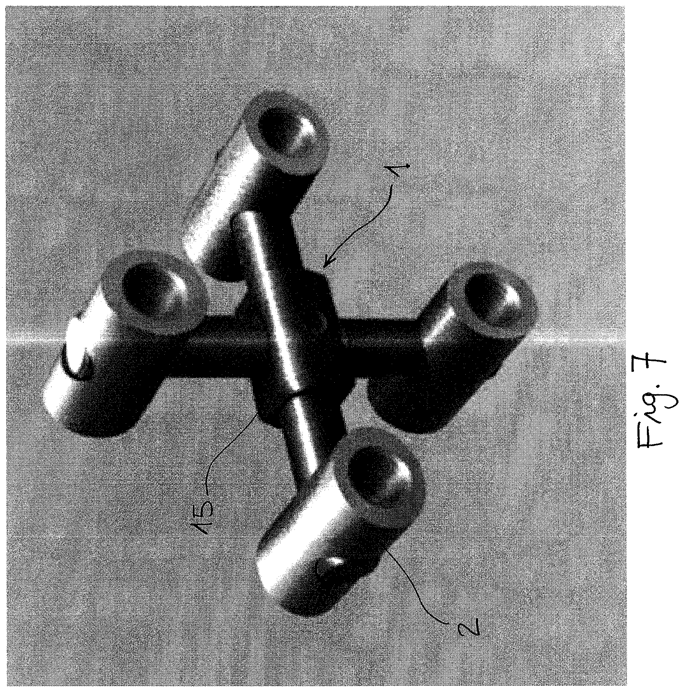

Figure 7 shows an embodiment of a joint of joint elements according to the present invention in which the connecting pin 1 comprises four ends, each of which being coupled with a clamping pin 2. This allows four considerably heavy and large elements to be connected to each other, for example four beams in a structure. It should be mentioned that the number of ends of the connecting pin 1 and the portion of broadened section 15 with respect to which they emerge, may vary according to other and different embodiments.

Advantageously, the joint of joint elements according to the present invention may be used to make a multitude of configurations for connecting the elements to be joined. To this end, and with reference again to figures 4A and 4B, it can be noted how the holes of the connecting pin 1 may be defined in different angular positions on the body of the connecting pin 1, this allowing a plurality of configurations for connecting the elements.

Furthermore, the transversal holes of the connecting pin 1 and the longitudinal holes of the clamping pin 2 may be blind, depending on the structural load they have to bear.

## Claims

1. Joint elements, comprising at least two elements (4) brought close to each other and a mechanical joint;
wherein the joint is for the reversible coupling of the at least two elements (4),
wherein each of the elements (4) has at least one hole (9) on a coupling interface,
wherein the joint comprises at least two clamping pins (2) and at least one connecting pin (1), wherein said at least one connecting pin (1) has two ends (1a, 1b) adapted to be respectively inserted in the at least one hole (9) of said at least two elements (4), wherein said at least two clamping pins (2) are adapted to be respectively coupled to said two ends (1a, 1b) and to said at least two elements (4),
wherein each of said at least one hole (9) of said at least two elements (4) has an inner part and an outer part with a broadened section;
wherein said at least one connecting pin (1) comprises, at one intermediate section, a broadened section (15) inserted without radial clearance in the outer part of each of said at least one hole (9) of said at least two elements (4) so that they are aligned in a predetermined way;
and wherein said two ends (1a, 1b) are inserted with radial clearance in the inner part of each of said at least one hole (9) of said at least two elements (4).

2. Joint elements according to claim 1, wherein said at least one connecting pin (1) has such a shape that it can be inserted in each of said at least one hole (9) of said at least two elements (4) only in one or two different ways and so that it cannot rotate after having been inserted.

3. Joint elements according to claim 2, wherein the cross section of said broadened section (15) of said at least one connecting pin (1) has such a shape that it can be inserted without radial clearance in the outer part of each of said at least one hole (9) only in one or two different ways and so that it cannot rotate after having been inserted.

4. Joint elements according to claim 3, wherein the shape of said cross section of said broadened section (15) of said at least one connecting pin (1) is a rectangle, in particular with rounded edges, or an elongated hexagon, in particular with rounded edges, or an ellipse, in particular having at least one perimeter bevel.

5. Joint elements according to claim 3 or 4, wherein the shape of the cross section of said two ends (1a, 1b) of said at least one connecting pin (1) is a central-symmetry plane figure, in particular a circle.

6. Joint elements according to any one of the preceding claims, wherein said at least two clamping pins (2) have such a shape that they can be respectively coupled to said at least two elements (4) in one or two different ways.

7. Joint elements according to claim 6, wherein said at least two clamping pins (2) are adapted to be inserted in two respective holes (10) of said at least two elements (4), and have such a shape so that they cannot rotate after having been inserted.

8. Joint elements according to claim 7, wherein the shape of the cross section of said at least two clamping pins (2) is a rectangle, in particular with rounded edges, or an elongated hexagon, in particular with rounded edges, or an ellipse, in particular having at least one perimeter bevel.

9. Joint elements according to any one of the preceding claims, wherein said broadened section (15) of said at least one connecting pin (1) has two ends respectively comprising two bevels (15a, 15b).

10. Joint elements according to any one of the preceding claims, wherein said broadened section (15) of said at least one connecting pin (1) has an articulation (7) allowing said at least one connecting pin (1) to bend according to any possible angle and according to a single rotation axis, so that said at least two elements (4) can thus be brought close to each other according to a predetermined angle.

11. Joint elements according to any one of the preceding claims, wherein said at least two clamping pins (2) have two through holes (11) adapted to receive respectively said two ends (1a, 1b) of said at least one connecting pin (1).

12. Joint elements according to claim 11, wherein each of said at least two clamping pins (2) has a threaded longitudinal hole (13) wherein a grub-screw (14) is screwed, said grub-screw being adapted to cooperate with one of said two ends (1a, 1b) of said at least connecting pin (1) so as to pull and secure said at least one connecting pin (1).

13. Joint elements according to claim 12, wherein said grub-screw (14) is adapted to cooperate with a transversal hole (12) in at least one of said two ends (1a, 1b), in particular with a bevel of said transversal hole (12).

14. Joint elements according to any one of the preceding claims, comprising a rod-like element adapted to be screwed, on one side, to said broadened section (15) of said at least one connecting pin (1) and, on the other side, to a third element to be reversibly coupled, the axis of said rod-like element being in particular perpendicular to the axis of said broadened section (15) of said at least one connecting pin (1).

## Patentansprüche

1. Gelenkelemente, umfassend wenigstens zwei Elemente (4), die nahe zueinander gebracht werden, und ein mechanisches Gelenk;
wobei das Gelenk zum reversiblen Kuppeln der wenigstens zwei Elemente (4) dient,
wobei jedes der Elemente (4) wenigstens ein Loch (9) auf einer Kupplungsschnittstelle aufweist, wobei das Gelenk wenigstens zwei Klemmstifte (2) und wenigstens einen Verbindungsstift (1) umfasst, wobei der wenigstens eine Verbindungsstift (1) zwei Enden (1a, 1b) aufweist, die dazu geeignet sind, jeweils in das wenigstens eine Loch (9) der wenigstens zwei Elemente (4) eingesteckt zu werden, wobei die wenigstens zwei Klemmstifte (2) dazu geeignet sind, jeweils mit den zwei Enden (1a, 1b) und den wenigstens zwei Elementen (4) verbunden zu werden,
wobei jedes des wenigstens einen Loches (9) der wenigstens zwei Elemente (4) einen inneren Teil und einen äußeren Teil mit einem erweiterten Abschnitt aufweist;
wobei der wenigstens eine Verbindungsstift (1) an einem Zwischenabschnitt einen erweiterten Abschnitt (15) umfasst, der ohne radiales Spiel in den äußeren Teil eines jeden des wenigstens einen Loches (9) der wenigstens zwei Elemente (4) so eingesteckt ist, dass sie in einer vorgegebenen Weise gefluchtet sind;
und wobei die zwei Enden (1a, 1b) mit radialem Spiel in den inneren Teil eines jeden des wenigstens einen Loches (9) der wenigstens zwei Elemente (4) eingesteckt sind.

2. Gelenkelemente nach Anspruch 1, wobei der wenigstens eine Verbindungsstift (1) eine solche Form aufweist, dass er in jedes des wenigstens einen Loches (9) der wenigstens zwei Elemente (4) auf nur eine oder auf zwei verschiedene Weisen so eingesteckt werden kann, dass er nach dem Einstecken nicht rotieren kann.

3. Gelenkelemente nach Anspruch 2, wobei der Querschnitt des erweiterten Abschnitts (15) des wenigstens einen Verbindungsstifts (1) eine solche Form aufweist, dass er ohne radiales Spiel in den äußeren Teil eines jeden des wenigstens einen Loches (9) auf nur eine oder auf zwei verschiedene Weisen so eingesteckt werden kann, dass er nach dem Einstecken nicht rotieren kann.

4. Gelenkelemente nach Anspruch 3, wobei die Form des Querschnitts des erweiterten Abschnitts (15) des wenigstens einen Verbindungsstifts (1) ein Rechteck ist, insbesondere mit abgerundeten Kanten, oder ein längliches Sechseck, insbesondere mit abgerundeten Kanten, oder eine Ellipse insbesondere mit wenigstens einer umlaufenden Fase ist.

5. Gelenkelemente nach Anspruch 3 oder 4, wobei die Form des Querschnitts der zwei Enden (1a, 1b) des wenigstens einen Verbindungstifts (1) eine mittensymmetrische, ebene Figur, insbesondere ein Kreis ist.

6. Gelenkelemente nach einem der vorstehenden Ansprüche, wobei die wenigstens zwei Klemmstifte (2) eine solche Form aufweisen, dass sie jeweils mit den wenigstens zwei Elementen (4) auf eine oder zwei verschiedene Weisen gekuppelt werden können.

7. Gelenkelemente nach Anspruch 6, wo die wenigstens zwei Klemmstifte (2) dazu geeignet sind, jeweils in zwei Löcher (10) der wenigstens zwei Elemente (4) eingesteckt zu werden, und eine solche Form aufweisen, dass sie nach dem Einstecken nicht rotieren können.

8. Gelenkelemente nach Anspruch 7, wobei die Form des Querschnitts der wenigstens zwei Klemmstifte (2) ein Rechteck ist, insbesondere mit abgerundeten Kanten, oder ein längliches Sechseck, insbesondere mit abgerundeten Kanten, oder eine Ellipse insbesondere mit wenigstens einer umlaufenden Fase ist.

9. Gelenkelemente nach einem der vorstehenden Ansprüche, wobei der erweiterte Abschnitt (15) des wenigstens einen Verbindungsstifts (1) zwei Enden aufweist, die jeweils zwei Fasen (15a, 15b) umfassen.

10. Gelenkelemente nach einem der vorstehenden Ansprüche, wobei der erweiterte Abschnitt (15) des wenigstens einen Verbindungsstifts (1) eine Gelenkverbindung (7) aufweist, die es dem wenigstens einen Verbindungsstift (1) erlaubt, sich in jedem beliebigen Winkel und in einer einzelnen Rotationsachse zu biegen, so dass die wenigstens zwei Elemente (4) folglich in einem vorgegebenen Winkel nahe zueinander gebracht werden.

11. Gelenkelemente nach einem der vorstehenden Ansprüche, wobei die wenigstens zwei Klemmelemente (2) zwei Durchgangslöcher (11) aufweisen, die dazu geeignet sind, jeweils die zwei Enden (1a, 1b) des wenigstens einen Verbindungsstifts (1) aufzunehmen.

12. Gelenkelemente nach Anspruch 11, wobei jeder der wenigstens zwei Klemmstifte (2) ein Langloch (13) mit Gewinde aufweist, in das eine Madenschraube (14) eingedreht ist, wobei die Madenschraube dazu geeignet ist, mit einem der zwei Enden (1a, 1b) des wenigstens einen Verbindungsstifts (1) zusammenzuwirken, um den wenigstens einen Verbindungsstift (1) zu ziehen und zu sichern.

13. Gelenkelemente nach Anspruch 12, wobei die Madenschraube (14) dazu geeignet ist, mit einem Querloch (12) in wenigstens einem der zwei Enden (1a, 1b), insbesondere mit einer Fase des Querloches (12) zusammenzuwirken.

14. Gelenkelemente nach einem der vorstehenden Ansprüche, umfassend ein stabförmiges Element, das dazu geeignet ist, auf einer Seite in den erweiterten Abschnitt (15) des wenigstens einen Verbindungsstifts (1) und auf der anderen Seite in ein drittes, reversibel zu kuppelndes Element eingedreht zu werden, wobei die Achse des stabförmigen Elements insbesondere senkrecht zur Achse des erweiterten Abschnitts (15) des wenigstens einen Verbindungsstifts (1) verläuft.

## Revendications

1. Éléments jointe, comprenant au moins deux éléments (4) ramenés l'un à proximité de l'autre et un joint mécanique ;
dans lesquels le joint est destiné au couplage réversible des au moins deux éléments (4),
dans lesquels chacun des éléments (4) possède au moins un trou (9) sur une interface de couplage, dans lesquels le joint comprend au moins deux broches de serrage (2) et au moins une broche de connexion (1), dans lesquels ladite au moins une broche de connexion (1) a deux extrémités (1a, 1b) adaptées pour être respectivement insérées dans l'au moins un trou (9) desdits au moins deux éléments (4), dans lesquels lesdites au moins deux broches de serrage (2) sont adaptées pour être respectivement couplées aux dites deux extrémités (1a, 1b) et aux dits au moins deux éléments (4),
dans lesquels chacun dudit au moins un trou (9) desdits au moins deux éléments (4) a une partie interne et une partie externe avec une section élargie;
dans lesquels ladite au moins une broche de connexion (1) comprend, au niveau d'une section intermédiaire, une section élargie (15) insérée sans jeu radial dans la partie extérieure de chacun dudit au moins un trou (9) desdits au moins deux éléments (4) au moins de sorte qu'ils sont alignés d'une manière prédéterminée;
et dans lesquels lesdites deux extrémités (1a, 1b) sont insérées avec un jeu radial dans la partie interne de chacun dudit au moins un trou (9) desdits au moins deux éléments (4).

2. Éléments jointe selon la revendication 1, dans lesquels ladite au moins une broche de connexion (1) a une forme telle qu'elle peut être insérée dans chacun dudit au moins un trou (9) desdits au moins deux éléments (4) seulement d'une ou de deux façons différentes et de sorte qu'elle ne peut pas tourner après avoir été insérée.

3. Éléments jointe selon la revendication 2, dans lesquels la section transversale de ladite section élargie (15) de ladite au moins une broche de connexion (1) a une forme telle qu'elle peut être insérée sans jeu radial dans la partie extérieure de chacun dudit au moins un trou (4) seulement d'une ou de deux façons différentes et de sorte qu'elle ne peut pas tourner après avoir été insérée.

4. Éléments jointe selon la revendication 3, dans lesquels la forme de ladite section transversale de ladite section élargie (15) de ladite au moins une broche de connexion (1) est un rectangle, en particulier avec des bords arrondis, ou un hexagone allongé, en particulier avec des bords arrondis, ou une ellipse, comportant notamment au moins un biseau périmétral.

5. Éléments jointe selon la revendication 3 ou 4, dans lesquels la forme de la section transversale desdites deux extrémités (1a, 1b) de ladite au moins une broche de connexion (1) est une figure de plan de symétrie centrale, en particulier un cercle.

6. Éléments jointe selon l'une quelconque des revendications précédentes, dans lesquels lesdites au moins deux broches de serrage (2) ont une forme telle qu'elles peuvent être couplées respectivement auxdits au moins deux éléments (4) d'une ou de deux manières différentes.

7. Éléments jointe selon la revendication 6, dans lesquels lesdites au moins deux broches de serrage (2) sont adaptées pour être insérées dans deux trous respectifs (10) desdits au moins deux éléments (4), et ont une forme telle qu'elles ne peuvent pas tourner après avoir été insérées.

8. Éléments jointe selon la revendication 7, dans lesquels la forme de la section transversale desdites au moins deux broches de serrage (2) est un rectangle, en particulier avec des bords arrondis, ou un hexagone allongé, en particulier avec des bords arrondis, ou une ellipse, comportant notamment au moins un biseau périmétral.

9. Éléments jointe selon l'une quelconque des revendications précédentes, dans lesquels ladite section élargie (15) de ladite au moins une broche de connexion (1) a deux extrémités comprenant respectivement deux biseaux (15a, 15b).

10. Éléments jointe selon l'une quelconque des revendications précédentes, dans lesquels ladite section élargie (15) de ladite au moins une broche de connexion (1) présente une articulation (7) permettant à ladite au moins une broche de connexion (1) de se courber selon un angle quelconque possible et selon un seul axe de rotation, de sorte que lesdits au moins deux éléments (4) peuvent ainsi être rapprochés l'un de l'autre selon un angle prédéterminé.

11. Éléments jointe selon l'une quelconque des revendications précédentes, dans lesquels lesdites au moins deux broches de serrage (2) comportent deux trous traversants (11) adaptés pour accueillir respectivement lesdites deux extrémités (1a, 1b) de ladite au moins une broche de connexion (1).

12. Éléments jointe selon la revendication 11, dans lesquels chacune desdites au moins deux broches de serrage (2) comporte un trou longitudinal fileté (13) dans lequel une vis sans tête (14) est vissée, ladite vis sans tête étant destinée à coopérer avec l'une desdites deux extrémités (1a, 1b) de ladite au moins une broche de connexion (1) de manière à tirer et à bloquer ladite au moins une broche de connexion (1).

13. Éléments jointe selon la revendication 12, dans lesquels ladite vis sans tête (14) est adaptée pour coopérer avec un trou transversal (12) dans au moins l'une desdites deux extrémités (1a, 1b), en particulier avec un biseau dudit trou transversal (12).

14. Éléments jointe selon l'une quelconque des revendications précédentes, comprenant un élément en forme de tige destiné à être vissé, d'un côté, sur ladite section élargie (15) de ladite au moins une broche de connexion (1) et, de l'autre côté, à un troisième élément à coupler de manière réversible, l'axe dudit élément en forme de tige étant notamment perpendiculaire à l'axe de ladite section élargie (15) de ladite au moins une broche de connexion (1).
